(19) Europäisches Patentamt
European Patent Office
Office européen des brevets

(11) **EP 3 583 490 B1**

(12) **EUROPÄISCHE PATENTSCHRIFT**

(45) Veröffentlichungstag und Bekanntmachung des Hinweises auf die Patenterteilung:
**16.08.2023 Patentblatt 2023/33**

(21) Anmeldenummer: **18706701.2**

(22) Anmeldetag: **16.02.2018**

(51) Internationale Patentklassifikation (IPC):
**G06F 3/01** *(2006.01)* **G06F 3/043** *(2006.01)*

(52) Gemeinsame Patentklassifikation (CPC):
**G06F 3/016; G06F 3/043; G06F 3/0436**

(86) Internationale Anmeldenummer:
**PCT/EP2018/053927**

(87) Internationale Veröffentlichungsnummer:
**WO 2018/149988 (23.08.2018 Gazette 2018/34)**

(54) **BEDIENEINHEIT FÜR EINE FAHRZEUGKOMPONENTE, INSBESONDERE MENSCH-MASCHINE-INTERFACE FÜR EIN FAHRZEUG**

OPERATING UNIT FOR A VEHICLE COMPONENT, IN PARTICULAR HUMAN-MACHINE INTERFACE FOR A VEHICLE

UNITÉ DE COMMANDE POUR UN COMPOSANT DE VÉHICULE, EN PARTICULIER INTERFACE HOMME-MACHINE POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2017 DE 102017103162
16.02.2017 DE 102017103166
16.05.2017 DE 102017208243**

(43) Veröffentlichungstag der Anmeldung:
**25.12.2019 Patentblatt 2019/52**

(73) Patentinhaber: **Behr-Hella Thermocontrol GmbH
59557 Lippstadt (DE)**

(72) Erfinder:
• **KIRSCH, Stefan
59494 Soest (DE)**
• **SCHWAB, Tobias
2504 Biel (CH)**
• **KESSLER, Jan Henning
33615 Bielefeld (DE)**
• **LANGENER, Sascha
59510 Lippborg (DE)**

(74) Vertreter: **dompatent von Kreisler Selting Werner - Partnerschaft von Patent- und Rechtsanwälten mbB
Deichmannhaus am Dom
Bahnhofsvorplatz 1
50667 Köln (DE)**

(56) Entgegenhaltungen:
**EP-A2- 2 397 933 JP-A- 2016 095 552
US-A1- 2013 127 755**

**Beschreibung**

Die Erfindung betrifft eine Bedieneinheit für eine Fahrzeugkomponente wie beispielsweise ein Mensch-Maschine-Interface (MMI oder Human-Maschine-Interface (HMI)) mit ortsaufgelöster Haptik zur Rückmeldung einer manuellen Betätigung. Insbesondere betrifft die Erfindung die Geräuschunterdrückung bei haptischem Feedback durch Biegewellen. Über den Einsatz für eine Fahrzeugkomponente bzw. in einem Fahrzeug hinaus lässt sich die Bedieneinheit auch für andere Touchscreen-Eingabevorrichtungen verwenden.

Die Eingabe von Befehlen zum Bedienen von Fahrzeugkomponenten mittels eines Touchscreens bzw. Touchpad erfreut sich zunehmender Beliebtheit. Dabei ist es aus Komfortgründen wünschenswert, wenn der Person die wirksame Eingabe eines Befehls, also die wirksame manuelle Betätigung rückgemeldet wird. Diesbezüglich haben sich sogenannte haptische Feedback-Konzepte bewährt, bei denen die Rückmeldung taktil erfolgt. Dabei wird das Touchpanel bzw. der Touchscreen als Ganzes mechanisch angeregt, wobei ebenfalls aus Komfortgründen ein Ausschwingen auf ein Minimum reduziert werden sollte. Im Idealfall schlägt das Touchpanel bzw. der Touchscreen lediglich ein einziges Mal kurzzeitig aus, um dann wieder in der Ruheposition zu verharren.

Insbesondere bei großflächigeren Touchscreens, wie sie zunehmend auch im Fahrzeug verbaut werden, sind die herkömmlichen Konzepte des haptischen Feedbacks aufgrund der zunehmenden Gewichte der zu bewegenden Komponenten nachteilig.

Es ist bekannt, für das haptische Feedback auf berührungsempfindlichen Oberflächen in diese Biegewellen einzuprägen. Dies ist beispielsweise in EP 2 684 111 A1, US 9 436 284 B2 und US 9 449 476 B2 beschrieben. Bei den bekannten Verfahren werden Aktuatoren verwendet, die Biegewellen in beispielsweise eine Scheibe wie z.B. die Abdeckscheibe eines Touchscreens einprägen. Als Aktuatoren werden unter anderem Piezo-Aktuatoren verwendet, die einlagig oder mehrlagig ausgeführt sind (sogenannte Multilayer-Piezo-Elemente). Derartige piezokeramische Elemente (nachfolgend Piezo-Element genannt) sind grundsätzlich bekannt und werden zur Einprägung von Biegewellen in beispielsweise einer Abdeckscheibe mit dieser schubsteif verbunden, was beispielsweise durch eine Verklebung erfolgen kann. Infolge der Ausdehnung der Piezo-Elemente bei elektrischer Ansteuerung verformen diese die Abdeckscheibe örtlich, so dass sich in der Abdeckscheibe Biegewellen ausbreiten. Durch Überlagerung der in unterschiedlicher Weise und zu unterschiedlichen Zeitpunkten angesteuerten Aktuatoren (Ansteuermuster) lässt sich damit in die Abdeckscheibe eine taktil erfassbare, ortsaufgelöste Oberflächenstruktur einprägen, die an verschiedenen Stellen unterschiedlich oder auch gleich sein kann.

Theoretische Grundlagen für die Ansteuerung der Aktuatoren können dem Paper "Localized Tactile Feedback on a Transparent Surface through Time-Reversal Wave Focusing" von Hudin et al. (DOI: 10.1109/TOH.2015.2411267) entnommen werden.

Ein gewisser Nachteil des haptischen Feedbacks durch Biegewellen ist in der störenden Geräuschentwicklung zu sehen. Denn die durch die Biegewellen erzeugten Schwingungen der Abdeckscheibe sind innerhalb eines Frequenzbereichs von einigen wenigen Hz bis etwa 16.000 Hz bis 20.000 Hz hörbar.

Aufgabe der Erfindung ist es, eine Bedieneinheit mit berührungsempfindlicher Bedienfläche mit Geräuschunterdrückung bei haptischem Feedback durch Biegewellen zu schaffen.

Aus US 2013/127755 A1 ist eine Bedieneinheit für eine Fahrzeugkomponente, insbesondere Mensch-Maschine-Interface für ein Fahrzeug nach dem Oberbegriff des Anspruchs 1 bekannt.

Zur Lösung dieser Aufgabe wird mit der Erfindung eine Bedieneinheit für eine Fahrzeugkomponente, insbesondere ein Mensch-Maschine-Interface (MMI bzw. HMI) für ein Fahrzeug vorgeschlagen, wobei die Bedieneinheit versehen ist mit den Merkmalen des Anspruchs 1.

Einzelne Ausgestaltungen der Erfindung sind Gegenstand der Unteransprüche.

Die Erfindung zielt also auf die Anordnung der Aktuatoren längs des Randes eines Bedienflächenträgers der Bedieneinheit (nachfolgend auch als Abdeckscheibe oder Coverglas bezeichnet) ab. An dieser Stelle sei hervorgehoben, dass die Begriffe "Abdeckscheibe" und "Coverglas" im Rahmen der Erfindung synonym für "Bedienfläche" verwendet werden. Erfindungsgemäß ist der Abstand der Aktuatoren zum Rand der Abdeckscheibe und damit zum die Abdeckscheibe starr einfassenden Rahmen dergestalt gewählt ist, dass die Entstehung von Biegewellen mit Frequenzen im hörbaren Frequenzbereich (beispielsweise bis 20.000 Hz) möglichst unterdrückt bzw. die Ausbreitung derartiger Biegewellen weitestgehend gedämpft wird. Dies wird nachfolgend erläutert.

Die Erfindung nutzt das Konzept der Einprägung von Biegewellen in den Bedienfeldträger, wozu sämtliche Aktuatoren angepasste, im Vorfeld berechnete und abgelegte Signale jeweils in örtlich begrenzt wirkende mechanische Anregungen umsetzen, die sich zu einer definierten Zeit und an definierter Stelle in Form von Biegewellen konstruktiv überlagern und zu anderen Zeiten und an anderen Orten unterhalb einer fühlbaren Schwelle liegen. Dabei werden Reflexionen an den Rändern durch feste Einspannung der Abdeckscheibe in den Rahmen aktiv ausgenutzt. Die Superposition verschiedener Signale für eine gleichzeitige konstruktive Interferenz an mehreren Stellen ist möglich. Methoden zur Berücksichtigung der Dämpfung der Biegewellen durch den Einfluss des Fingers/der Finger sind verfügbar.)

Beim Anregen von Biegewellen in der Abdeckscheibe eines Touchscreen oder Touchpanel zu Zwecken des haptischen Feedbacks entstehen in der Regel Frequenzkomponenten, die für das menschliche Ohr gut hörbar sind. Durch nicht lineare Effekte am Übergang der Aktuatoren zur Abdeckscheibe treten diese Frequenzen auch bei gezielter Filterung der Aktuator-Anregungssignale auf.

Die Einprägung einer Biegewelle geschieht üblicherweise nahe des Randes der Abdeckscheibe. Ist dieser Rand fest eingespannt, d.h. in keiner der Raumrichtungen beweglich gelagert, so kann durch Einstellen des Abstands des Randes bzw. des Rahmens der Abdeckscheibe zum Aktuator erreicht werden, dass gewisse Wellenlängen (und damit gewisse Frequenzen) durch die "starre Randbedingung" stark gedämpft werden. Bei sehr kleinen Abständen (Größenordnung Millimeter bei gängigen Materialparametern für Abdeckscheiben) liegt die Schwelle, ab der längere Wellenlängen stark gedämpft werden, gerade im hörbaren Bereich. Nur kürzere Wellenlängen und somit höhere (Ultraschall-) Frequenzen können mit signifikanter Energie noch in die Abdeckscheibe eingeprägt werden. Üblicherweise besteht die Abdeckscheibe aus gehärtetem Glas, das sich für die Erfindung besonders gut eignet.

Über den Abstand zwischen einem Aktuator vom Rand lässt sich bei gegebenen Material- und Geometrieparametern steuern, welche Frequenzen nicht bzw. nur gedämpft ins Coverglas in Form von Biegewellen eingeprägt werden können. Speziell der Anforderung der Automobilindustrie an bruchsicheres und somit relativ dickes Coverglas kann durch eine spezielle, leistungsstarke Auslegung der Aktuatoren und der Elektronik Rechnung getragen werden.

Nachfolgend wird der Zusammenhang zwischen den Material- und Geometrieparametern und der kleinsten ungedämpft einprägbaren Frequenz grob formelmäßig angegeben. Dabei sei angenommen, dass das Coverglas die Dicke d, den E-Modul Y, die Dichte $\varrho$, die Poissonzahl v. hat. Der Zusammenhang zwischen Wellenlänge λ und Frequenz f ergibt sich dann zu (vgl. K.F. Graff, Wave Motion in Elastic Solids, Courier Dover Publications, 1975):

$$f = \frac{\pi d}{\lambda^2} \sqrt{\frac{Y}{3\varrho(1-v^2)}}$$

Geht man davon aus, dass sich aufgrund des starren Rahmens nur Wellen mit $\frac{\lambda}{4} < a$ nahezu ungehindert ausbreiten können, ergibt sich die folgende grobe Abschätzung für die kleinste Frequenz, die sich ohne Beeinträchtigung in Form von Biegewellen ins Coverglas einbringen lässt:

$$f_{min} = \frac{\pi d}{16a^2} \sqrt{\frac{Y}{3\varrho(1-v^2)}}$$

Noch kleinere Frequenzen korrespondieren mit Wellenlängen, die größer als das Vierfache des Abstands a sind und somit mechanisch durch die Nähe zum Rand gedämpft werden. Zu berücksichtigen ist, dass diese Dämpfung im Grenzbereich recht schwach sein kann, da der Rahmen im Extremfall nur in einem Punkt den Abstand a zum Aktor aufweist. Für kleine Frequenzen, d.h. größere Wellenlängen, beteiligt sich jedoch ein größerer Ausschnitt des Rahmens an der Dämpfung, so dass diese zunehmend stärker wird.

Der Abstand a kann somit so eingestellt werden, dass ein Teil des hörbaren Spektrums gedämpft wird.

Die Anordnung kann als mechanisches Filter aufgefasst werden, bei dem der Frequenzgang durch den Abstand des Aktors zum (starren) Rand eingestellt werden kann. Der aus praktischer Sicht einfachere Weg der Hochpassfilterung des Ansteuerungssignals des Aktors mit einem elektrischen Hochpass, ist nicht gangbar, da der Übergang vom Aktor (elektrisch) zum Coverglas (mechanisch) in der Regel eine nichtlineare Charakteristik aufweist und somit trotzdem mechanische Wellen im hörbaren Spektrum entstehen.

Bei dem vorstehend beschriebenen Abstand, der erfindungsgemäß zur Unterdrückung der Entstehung und/oder Ausbreitung von Biegewellen mit Frequenzen im hörbaren Bereich gewählt wird, handelt es sich also um die Distanz des Rahmens zur jeweiligen Kontaktfläche, an der der Aktuator mit der Abdeckscheibe möglichst schubsteif verbunden ist, wobei dieser Abstand in einer zum Rahmen orthogonal verlaufenden Richtung zu betrachten ist. Insbesondere ist der Abstand die Distanz des Rahmens zum geometrischen Mittelpunkt der Kontaktfläche, bei der es sich zweckmäßigerweise um eine Kreisfläche handelt; dementsprechend sind dann auch die Piezo-Elemente als kreisrunde Scheibenelemente ausgebildet, und zwar einlagig oder mehrlagig.

Durch Untersuchungen hat sich herausgestellt, dass der zu dämpfende Frequenzbereich der Biegewellen dadurch präziser eingestellt und eingehalten werden kann, dass jedem Aktuator und damit jeder Kontaktfläche längs des Randes der Abdeckscheibe eine Kammer zugeordnet wird, in der der Aktuator bzw. die Kontaktfläche positioniert ist. Demzufolge erstrecken sich nach der Erfindung von dem Rahmen des Gehäuses aus Arme, die zum Mittenbereich der Abdeckscheibe weisen und schubsteif mit der Abdeckscheibe verklebt sind. Durch die im Wesentlichen rechtwinklig vom Rahmen abstehenden Arme bilden sich längs des Rahmens einzelne Kammern mit zum Mittenbereich der Abdeckscheibe weisenden Innenseiten, an denen jede Kammer eine Öffnung aufweist. Durch die Arme, d.h. die seitlichen Kammerwände wird nun ebenfalls die Entstehung und die Ausbreitung von Biegewellen mit unerwünschten Frequenzen gedämpft bzw. verhindert. Auch hier gilt, dass der Abstand der Kontaktfläche zu den Kammerwänden wie oben beschrieben gewählt wird. Bei einer kreisrunden Kontaktfläche ist dann vorteilhafterweise auch die Kammer in Draufsicht kreisrund, wobei ihre Kammerwand konzentrisch zur Kontaktfläche verläuft.

Die Arme sind zweckmäßigerweise an ihren zum Rahmen weisenden Enden mit Basisabschnitten versehen, über die sie miteinander verbunden sind. Damit können die Arme und die Kammern als Kammstrukturelement ausgebildet sein, das sich in den Rahmen einsetzen und mit der Abdeckscheibe möglichst schubsteif verbinden lässt. Die Kammeröffnungen erstrecken sich zweckmäßigerweise über 60° bis 120° und vorzugweise über 90° des Umfangs der jeweiligen Kammer und sind symmetrisch zu einer orthogonal zum Rahmen verlaufenden Mittel- bzw. Symmetrieachse der Kammer angeordnet. Die Kammern selbst sind zweckmäßigerweise ebenfalls symmetrisch zu dieser Achse.

Durch die gemäß der Erfindung vorgeschlagene "Einfassung" der einzelnen Aktuatoren wandern also die Biegewellen im hörbaren Frequenzbereich nicht bzw. allenfalls gedämpft über die Berandungen der Kammern hinaus. Der gewählte Abstand zwischen Aktuator und Kammerberandung definiert den gedämpften Frequenzbereich, so dass sich durch Wahl des Durchmessers der Kammern (bei runden Kammern) einstellen lässt, ab welcher Frequenz sich Biegewellen (ungehindert) im Coverglas ausbreiten können. Tendenziell lässt sich sagen, dass mit größerem Durchmesser die kleinste einprägbare Frequenz sinkt, d.h. die größte einprägbare Wellenlänge steigt. Ein genauer formelmäßiger Zusammenhang lässt sich nicht angeben, kann aber über Finite Elemente Simulationen abgeschätzt werden.

In weiterer zweckmäßiger Ausgestaltung der Erfindung kann vorgesehen sein, dass die Abdeckscheibe mit dem Rahmen verklebt ist, wobei der Randbereich der Abdeckscheibe auf einer Auflagefläche des Rahmens aufliegt und dort flächig mit der Abdeckscheibe verklebt ist. Dadurch fasst der Rahmen die Abdeckscheibe starr ein. Alternativ oder zusätzlich kann der Rahmen den Rand der Abdeckscheibe auch klemmend einfassen.

Eine weitere vorteilhafte Ausgestaltung der Erfindung betrifft die "flexible" Anbindung des Coverglases an das Display des Touchscreens bzw. eines Touchpad. Gemäß einer zweckmäßigen Weiterbildung der Erfindung wird vorgeschlagen, das Coverglas durch eine elastische, flexible Klebeverbindung flächig an die Vorderseite des Displays anzubinden. Die Anforderungen an die Klebeverbindung sind eine möglichst 100 %ige Transparenz, die keinerlei oder nur kaum merkliche Einflüsse auf die Farbwiedergabe hat, und ein geringer E-Modul. Als Materialien für die Klebeverbindung eignen sich Materialien, die z.B. für optisches Bonding eingesetzt werden, wobei diese Materialien flexibel, elastisch, weich dehnbar sein und/oder nicht oder nur schwach mechanisch dämpfend wirken sollten und/oder z.B. gelartig sein können.

Wie sich aus dem Vorstehenden ergibt, wird die Erfindung mit Vorteil bei Touchscreens eingesetzt. Touchscreens weisen ein Touchpanel auf, das sich im Regelfall direkt unterhalb des Coverglases befindet. Die Touchpanel arbeiten zumeist kapazitiv; aber auch optisch und resistiv arbeitende Touchpanel können eingesetzt werden.

Die Anbindung des Touchpanel an das Coverglas kann wie herkömmlich geschehen. Für die möglichst ungedämpfte Ausbildung der Biegewellen im Coverglas ist hier nicht notwendigerweise eine elastische, flexible Klebeverbindung erforderlich. Normalerweise wird das Coverglas vermittels des Touchpanel flächig an die Vorderseite des Displays angekoppelt. Das Touchpanel selbst ist dergestalt flexibel und dünn ausführbar, dass es die Ausbreitung von Biegewellen im Coverglas erlaubt, ohne dass diese zu stark durch das Touchpanel gedämpft werden. Eine starre Verbindung des Coverglases zur Vorderseite des Display (auch gegebenenfalls unter Anordnung eines Touchpanel zwischen beiden) sollte wegen der zu starken Dämpfung der Biegewellen durch das steife Display vermieden werden, was z.B. durch, wie oben beschrieben, einen Luftspalt oder durch eine flexible Kopplung umgangen werden kann.

Der erfindungsgemäße Ansatz zur haptischen Rückmeldung in Anzeigebedienteilen beruht, wie zuvor beschrieben, auf Biegewellen im Coverglas, welche eine haptische Rückmeldung vermitteln, aber die Oberfläche nicht translativ bewegen. Je starrer jedoch die Bonding-Masse, d.h. je höher deren Elastizitätsmodul ist, desto stärker werden Biegewellen gedämpft und somit die Implementierung dieses Ansatzes unterbunden. Weiterhin wird auch die effektiv zu bewegende Masse drastisch erhöht.

Die hier beschriebene Weiterbildung der Erfindung betrifft also den Einsatz einer elastischen Bonding-Masse gezielt zur möglichst schwachen Dämpfung von Biegewellen im Coverglas, so dass sowohl die optische Qualität des Displaysystems weiterhin sichergestellt ist, als auch die Ausbreitung von Biegewellen für praxisrelevante Zwecke möglich wird.

Nach aktuellem Stand der Technik für Biegewellen ist das Coverglas solitär und damit mittels eines Luftspaltes direkt vor dem Display positioniert, so dass das Coverglas "frei" schwingen kann. So kann z.B. Schmutz und Feuchtigkeit in den Luftspalt gelangen. Außerdem kann der Luftspalt die optischen Eigenschaften durch Lichtreflexion an den Grenzflächen und die damit verbundene Entstehung von "doppelten" Bildern negativ beeinflussen, was allerdings durch geeignete Folien, integriert in den Displayaufbau, vermieden/ reduziert werden kann.

Durch eine elastische Bonding-Masse kann auf der einen Seite der optische Nachteil des Luftspalts umgangen werden. Auf der anderen Seite wird dadurch die weitestgehend ungedämpfte Ausbreitung von Biegewellen ermöglicht.

Neben der Ausnutzung der Biegewellen zur Generierung von haptischem Feedback eignet sich die Kombination von Biegewellen mit flexibler Bonding-Masse ebenso zur Toucherkennung sowie zur Kraftmessung (Force Sense), wobei anzumerken ist, dass das Vorsehen einer mechanischen Trennung der Abdeckscheibe zum Touchpanel oder zum Display, also zu der unterhalb der Abdeckscheibe angeordneten Komponente definitiv eine bessere Biegewellenausbreitungsperformance gewährleistet.

Die Erfindung kann darüber hinaus mit Vorteil in Kombination mit der Detektion des Berührungsorts auf der berührungsempfindlichen Bedienfläche mittels Ultraschall kombiniert werden. Derartige Berührungs-Detektionskonzepte sind grundsätzlich bekannt und beispielsweise in US 9 449 476 B2 und US 9 477 350 B2 beschrieben. Bei der ortsaufgelösten Berührungsdetektion mittels Ultraschall werden Ultraschall-Biegewellen in die Abdeckscheibe, d.h. in die berührungsempfindliche Bedienfläche eingeprägt, und zwar beispielsweise durch Piezo-Ultraschallsender, wobei die Ausbreitung der Biegewellen mittels insbesondere Piezo-Ultraschallempfänger erkannt wird. In dem Augenblick, in dem die berührungsempfindliche Bedienfläche mittels eines Objekts, beispielsweise einem Finger kontaktiert wird, ist die Ausbreitung der Ultraschall-Detektionsbiegewelle gedämpft. Die Verwendung mehrerer Ultraschallsender und mehrerer Ultraschallempfänger kann dann aus den empfangenen Signalen und der Position der Sender und Empfänger auf den Ort der Berührung geschlossen werden.

Auch bei diesem Konzept kann es von Vorteil sein, bestimmte Frequenzen der Detektionsbiegewellen zu unterdrücken, wie es oben beschrieben ist. Mit Vorteil kann insbesondere vorgesehen sein, dass einige der Aktuatoren für die Haptikbiegewelleneinprägung zuvor für die Einprägung und dem Empfang von Detektionsbiegewellen genutzt werden. Nachdem erfindungsgemäß längs vorteilhafterweise der gesamten Berandung der Abdeckscheibe Aktuatoren nebeneinander angeordnet sind, befinden sich also Aktuatoren auch an denjenigen Stellen, die sich für das Aussenden und Empfangen von Detektionsbiegewellen zur Ermittlung des Berührungsorts auf der Bedienfläche eignen. Damit können einige der erfindungsgemäß längs des Randes der Abdeckscheibe vorgesehenen Aktuatoren mehrfach genutzt werden. Die Steuerung und Auswertung der Aktuatoren bzw. der Touchsensorik erfolgt erfindungsgemäß mit Hilfe einer Auswerte- und Ansteuereinheit, wie sie bereits weiter oben im Zusammenhang mit der erfindungsgemäßen Bedieneinheit angegeben ist.

Die Auswerte- und Ansteuereinheit lässt sich beispielsweise auch zur Ermittlung der Signale zur Ansteuerung der Aktuatoren zwecks haptischem Feedback durch die Biegewellen ausnutzen. Nachfolgend wird beispielhaft eine Prozedur angegeben, mit der diese Signale im Vorfeld ermittelt werden können:

- Laservibrometer auf die Stelle ausrichten, an der Feedback erzeugt werden soll;

  - Ein einzelnes Piezo-Element mit einem oder mehreren Rauschsignalen anregen;
  - Aus der mit dem Laservibrometer gemessenen Auslenkung die Übertragungsfunktion zwischen Anregungssignal des jeweiligen Piezo-Elements und der Auslenkung am gewählten Ort bestimmen;
  - Dazu Fouriertransformation des Anregungs- und des Messsignals in den Frequenzbereich und Division beider Spektren;
  - Anschließend Rücktransformation der Übertragungsfunktion in den Zeitbereich (liefert Impulsantwort);
  - Ausschneiden der ersten, insbesondere 2 ms der Impulsantwort und Umkehren der Zeitachse;
  - Durch Anwenden der Signum-Funktion das ermittelte Signal auf zwei diskrete Spannungspegel beschränken;
  - Die obigen Punkte zunächst für alle anderen Piezo-Elemente wiederholen;

- Den gesamten zuvor beschriebenen Prozess für die gewünschte Anzahl von Orten auf dem Coverglas wiederholen.

Die Signale (sowohl das weiße Rauschen zur Einmessung als auch die ermittelten Anregungssignale) werden gespeichert und bei Bedarf (z.B. Finger durch Touch-Folie erkannt oder in periodischer Wiederholung) abgespielt.

Zur Transformation der Spannungspegel am Ausgang eines Mikrocontrollers auf die Spannungspegel $\pm V_{Piezo}$ können an sich bekannte elektronische Verstärkerschaltungen verwendet werden.

Nachfolgend wird anhand der Zeichnung ein Ausführungsbeispiel der Erfindung näher beschrieben. Im Einzelnen zeigen dabei:

Fig. 1      eine perspektivische Draufsicht auf eine Bedieneinheit mit berührungsempfindlicher Bedienfläche,

Fig. 2      eine Unteransicht auf die Bedieneinheit, und zwar auf deren berührungsempfindliche Bedienfläche von unten,

Fig. 3      eine perspektivische Darstellung (schematisch) zur Verdeutlichung einer taktil erfassbaren, ortsaufgelösten Oberflächenstruktur der Bedienfläche infolge der Einprägung von Biegewellen und deren Überlagerung,

Fig. 4      eine perspektivische Darstellung von unten ähnlich der Unteransicht gemäß Fig. 2,

Fig. 5      eine Schnittansicht entlang der Linie V-V der Fig. 4,

Fign. 6 bis 11      Simulationskurven zur Verdeutlichung des Einflusses der erfindungsgemäß vorgesehenen verschiedenen Maßnahmen zur Geräuschunterdrückung beim haptischen Feedback von berührungsempfindlichen Bedienflächen durch Biegewellen,

Fig. 12      eine schematische Darstellung eines Touchscreen mit auf Abstand zum Touchpanel angeordneten Coverglas und

Fig. 13      eine schematische Darstellung ähnlich der gemäß Fig. 12 jedoch mit durch eine optische Bonding-Masse ausgefülltem Luftspalt zwischen dem mittels Biegewellen angeregten Coverglas und dem Touchpanel des Touchscreen.

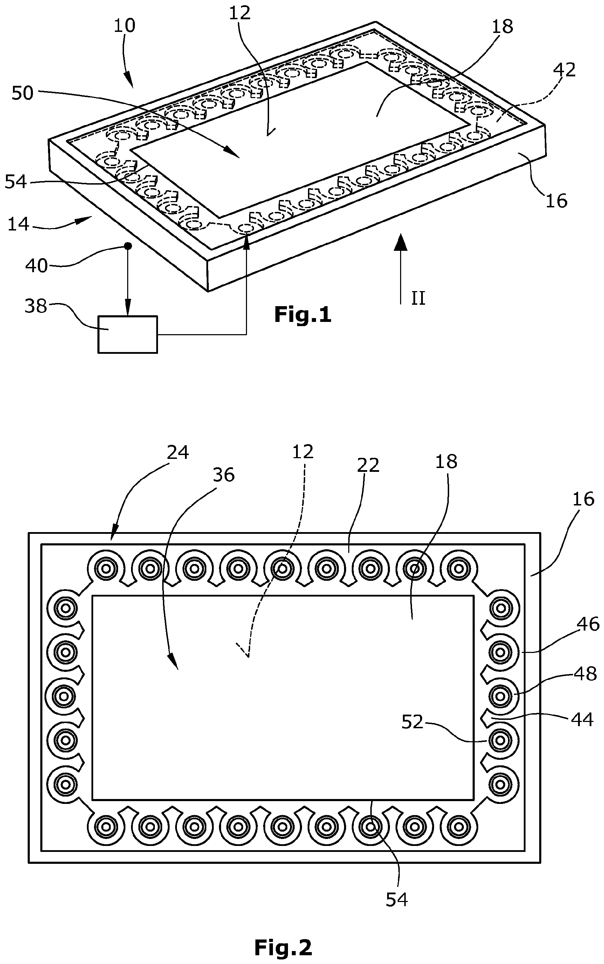

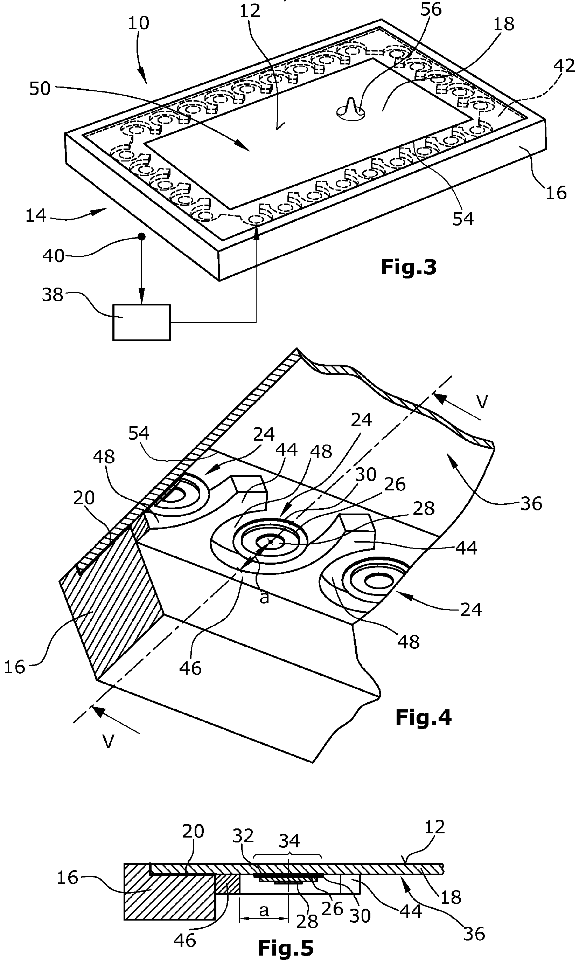

In den Fign. 1 bis 5 sind verschiedene Ansichten auf eine Bedieneinheit 10 mit berührungsempfindlicher Bedienfläche 12 gezeigt. Die Bedieneinheit 10 weist ein Gehäuse 14 mit einem Rahmen 16 aus beispielsweise Metall auf. Der Rahmen 16 umgreift eine Abdeckscheibe 18 aus beispielsweise gehärtetem Glas, die mit dem Rahmen 16 beispielsweise mittels eine Klebeschicht 20 verklebt und damit starr verbunden ist (siehe auch die Fign. 4 und 5).

Wie anhand der Fign. 1 und 2 zu erkennen ist, befinden sich längs des Randes 22 der Abdeckscheibe 18 und somit auch längs des Rahmens 16 eine Vielzahl von Aktuatoren 24 zur Einbringung von Biegewellen in die Abdeckscheibe 18. Jeder dieser Aktuatoren 24 ist, wie beispielsweise anhand der Fign. 4 und 5 zu erkennen ist, kreisscheibenförmig ausgebildet. Jeder Aktuator 24 weist dabei ein ein- oder mehrlagiges kreisrundes Piezo-Element 26 auf, das beidseitig mit Elektroden 28,30 und bei mehrlagigen Piezo-Elementen auch mit Elektroden zwischen den einzelnen piezokeramischen Materiallagen versehen ist. Diese Sandwichstruktur ist mittels einer Klebeverbindung 32 innerhalb einer Kontaktfläche 34 an der Unterseite 36 der Abdeckscheibe 18 vergleichsweise schubsteif befestigt. Die Kontaktierung der Aktuatoren 24 ist in den Figuren nicht dargestellt. In Fig. 1 ist lediglich noch schematisch gezeigt, dass die Bedieneinheit 10 ferner eine Auswerte- und Ansteuereinheit 38 aufweist, die Signale von einer Touchsensorik (angedeutet bei 40) empfängt und Ansteuersignale an die Aktuatoren 24 ausgibt, was in Fig. 1 für lediglich einen der Aktuatoren 24 grafisch dargestellt ist.

Zusätzlich weist die Bedieneinheit 10 ein rahmenartiges Kammstrukturelement 42 auf, das vorzugsweise aus Metall gebildet ist. Dieses Kammstrukturelement 42 ist als umlaufender Rahmen ausgebildet und weißt eine Kammstruktur auf, die aus einer Vielzahl von orthogonal zum Rahmen 16 bzw. zum Rand 22 verlaufenden Armen 44 mit diese verbindenden Basisabschnitten 46 gebildet ist. Durch diese Kammstruktur bilden sich einzelne Kammern 48, in denen jeweils ein Aktuator 24 angeordnet ist. Die Kammern 48 sind zum Mittenbereich 50 offen, wobei sich diese Öffnungen 52 über etwa 60° bis 120°, insbesondere über 90° erstrecken. Die Kammern 48 sind in diesem Ausführungsbeispiel rund ausgebildet und ihre Kammerwandungen verlaufen an der Innenseite konzentrisch zu den Aktuatoren 24. Das Kammstrukturelement 42 kann als vom Rahmen 16 getrenntes Element ausgeführt sein oder aber das Kammstrukturelement 42 mit Rahmen 16 sind als einstückiges gemeinsames Teil hergestellt (in beiden Varianten z.B. durch spanende Bearbeitung oder gießtechnisch).

Durch die Wahl des Abstandes a (siehe Fign. 4 und 5) der Aktuatoren 24 von ihren jeweiligen Kammerwandungen kann Einfluss genommen werden auf den Frequenzbereich, in dem von den Aktuatoren 24 in die Abdeckscheibe 18 eingebrachte Biegewellen gedämpft sind. Dieser Frequenzbereich umfasst zweckmäßigerweise den hörbaren Bereich, so dass durch diese Maßnahme, nämlich den Einschluss der Aktuatoren 24 durch die Kammern, keine hörbaren Frequenzen abgestrahlt werden, bzw. die hörbaren Frequenzen nur gedämpft abgestrahlt werden.

In den Fign. 1 und 2 ist noch bei 54 ein geschwärzter Randbereich der Abdeckscheibe 18 gezeigt, der die Anordnung der Aktuatoren 24 längs des Randes und das Kammstrukturelement 42 verdecken soll.

In Fig. 3 ist schematisch angedeutet, wie durch die möglicherweise zeitversetzte und mit unterschiedlichen Signalen erfolgte Ansteuerung der Vielzahl von Aktuatoren 24 in die Abdeckscheibe 18 Biegewellen eingeprägt werden können, deren Überlagerung an einem bestimmten Ort 56 zu einer kurzzeitig, d.h. impulsartig existierenden spürbaren "Beule" führt, was wiederum von dem Benutzer, dessen Finger wegen der manuellen Betätigung an dem Ort 56 auf der Abdeckscheibe 18 (noch) aufliegt, taktil erfassbar ist, und zwar wegen des kurzzeitigen "Stoßes" in der Abdeckscheibe 18 am Berührungsort 56.

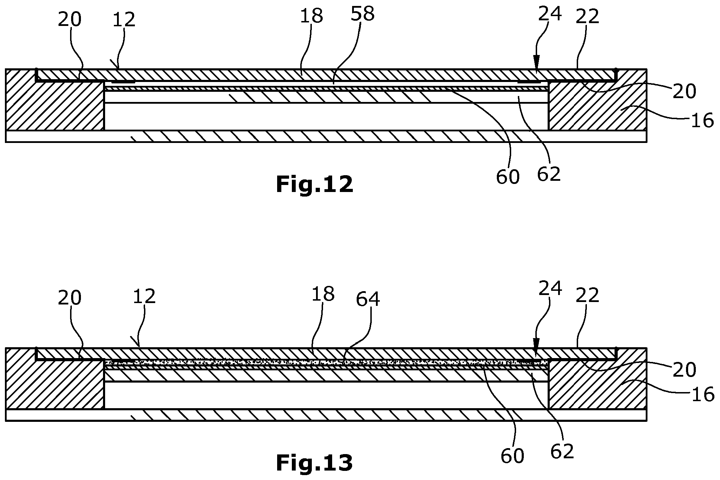

Die Detektion des Berührungsortes kann mittels Ultraschall-Biegewellen erfolgen, die von einigen wenigen der Aktuatoren 24 in einer ersten Phase der Berührung der Bedienfläche 12 erzeugt und sensiert werden, um anhand der sensierten Signale dann auf den Berührungsort zu schließen. Die Technik der Ermittlung des Berührungsortes durch Ultraschallwellen ist grundsätzlich bekannt. Alternativ lassen sich als Touchsensorik Touchpanel einsetzen. Normalerweise arbeiten Touchscreen, bei denen die Erfindung mit Vorteil eingesetzt wird, mit kapazitiven oder resistiven bzw. optischen Touchpanel, die unterhalb der Abdeckscheibe 18 angeordnet sind. Dies ist in den Fign. 12 und 13 gezeigt. Auch das eigentliche Display ist in den diesen Figuren gezeigt.

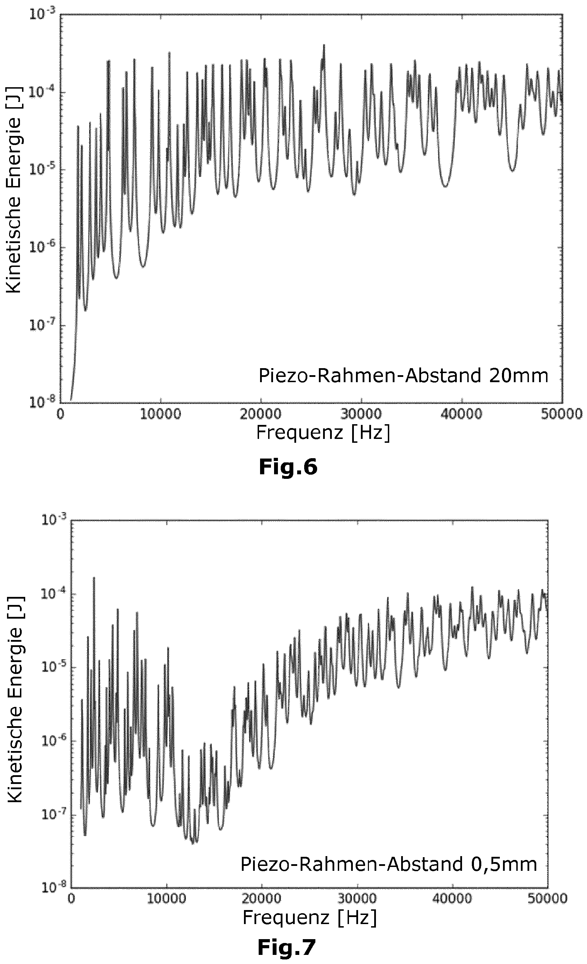

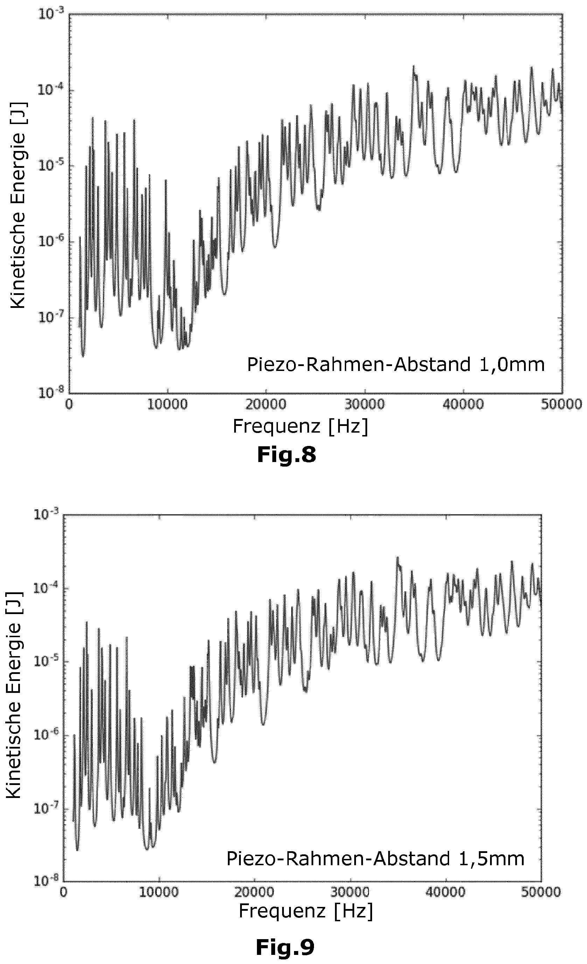

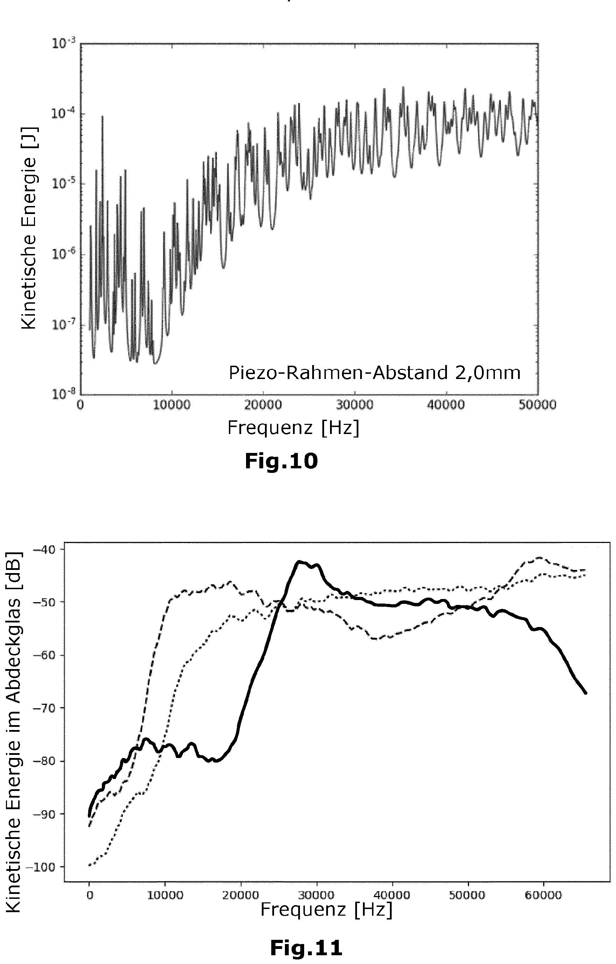

Bereits oben wurde im Einzelnen erläutert, wie sich näherungsweise der Abstand a bestimmen lässt, damit sich Biegewellen mit Frequenzen im hörbaren Spektrum (z.B. bis 20.000 Hz), die von den Aktuatoren in die Abdeckscheibe 18 eingebracht werden, nur gedämpft bzw. gar nicht in der Abdeckscheibe 18 ausbreiten. Simulationskurven zu verschiedenen Abständen und den dabei sich ergebenden Frequenzgängen sind in den Fign. 6 bis 10 gezeigt. Der Referenzkurve gemäß Fig. 6 liegt ein Aktuator mit großem Abstand zum Rand (20,0 mm) zugrunde. Über den gesamten Frequenzbereich wird annähernd gleich viel Energie in die Abdeckscheibe eingekoppelt. Die Kurven der Fign. 7 bis 10 gehören zu Systemen, bei denen der Aktuator sehr nahe am Rand platziert ist, und zwar bei Fig. 7 im Abstand von 0,5mm, bei Fig. 8 im Abstand von 1,0mm, bei Fig. 9 im Abstand von 1,5mm und bei Fig. 10 im Abstand von 2,0mm. Man sieht deutlich die Dämpfung im hörbaren Bereich (bis 20.000 Hz) und den Einfluss des Abstands auf die spektrale Verteilung.

Die zuvor beschriebenen Simulationskurven wurden erstellt, ohne dass zusätzlich auch noch das Kammstrukturelement 42 mit der Kammstruktur verwendet wurde.

Anhand der Fig. 11 zeigt sich, dass Simulationen ergeben, dass unter Verwendung des Kammstrukturelements 42 mit der die Kammern bildenden Kammstruktur weitaus bessere Ergebnisse erzielt werden können, als dies ohne die Kammern der Fall ist.

Fig. 11 zeigt die Dämpfungsprofile für unterschiedliche Szenarien. Die gestrichelte Linie zeigt das Dämpfungsprofil für den Fall, dass die Aktuatoren in einem nicht optimal gewählten Abstand zum Rand angeordnet sind. Die gepunktete Linie zeigt das Dämpfungsprofil bei Anordnung der Aktuatoren in einem gezielt gewählten Abstand zur Dämpfung von Biegewellen mit Frequenzen im hörbaren Bereich. Schließlich zeigt die durchgezogene Linie das Dämpfungsprofil unter Verwendung des optimierten Abstands der Aktuatoren vom Rand und zusätzlich unter Verwendung des Kammstrukturelements 42 mit Kammstruktur und Einzelkammern. Sämtliche Dämpfungsprofilkurven sind Simulationen unter der Annahme einer Abdeckscheibe 18 aus gehärtetem Glas. Gemäß durchgezogener Linie werden hörbare Frequenzen (bis circa 20.000 Hz) um etwa 30 dB stärker gedämpft als Ultraschallfrequenzen. Es zeigt sich, dass die Verwendung des Kammstrukturelements 42 eine deutliche Verbesserung gegenüber dem Konzept der speziellen Abstandswahl bringt, bei dem sich bereits ein positiver Einfluss auf die Dämpfung von Biegewellen mit Frequenzen im hörbaren Bereich zeigt, diese Biegewellen aber leider noch nicht vollständig unterdrückt werden können (siehe die gepunktete Linie in Fig. 11), was aber unter Verwendung des Kammstrukturelements 42 gelingt.

Anhand der Fign. 12 und 13 soll nachfolgend noch auf eine weitere Besonderheit gemäß einem Ausführungsbeispiel der Erfindung eingegangen werden. Gemäß Fig. 12 befindet sich unterhalb der Abdeckscheibe 18 ein Luftspalt 58, der es ermöglicht, dass die Abdeckscheibe 18 frei "schwingen" kann, wenn über die Aktuatoren 24 Biegewellen eingeprägt werden. Eine Verbindung zum Touchpanel 60 oder, wenn die Touchsensorik anders als durch ein Touchpanel ausgeführt wäre, Display 62 (gegebenenfalls mit Hinterleuchtungseinheit - nicht dargestellt) würde kontraproduktiv sein und die Ausbreitung der Biegewellen zu stark dämpfen. Der Luftspalt 58 allerdings hat den Nachteil, dass sich dort Verunreinigungen und insbesondere Feuchtigkeit ansammeln könnte.

Insoweit günstiger ist es, wenn die Abdeckscheibe 18 mittels optischem Bonding an das Touchpanel 60 oder, wenn ein derartiges Touchpanel 60 nicht vorgesehen ist, an das Display 62 angebunden ist. Optisches Bonden bei Displays ist grundsätzlich bekannt. Als Bonding-Masse 64 wird zweckmäßigerweise ein flexibles Material verwendet, das sich in der Abdeckscheibe 18 ausbreitende Biegewellen nicht bzw. nicht nennenswert dämpft.

In den Ausführungsbeispielen der Fign. 12 und 13 kann zusätzlich, wenn gewünscht, auch noch das Kammstrukturelement 42 des Ausführungsbeispiels der Fign. 1 bis 5 verwendet werden.

Die zuvor beschriebene elastische Anbindung der Abdeckscheibe bzw. allgemein der Bedienfläche an angrenzende Komponenten der Bedieneinheit, die unterhalb der Bedienfläche angeordnet sind, betrifft einen Gegenstand, der umsetzbar ist, ohne dass es dazu zwingend der hier beschriebenen erfindungsgemäßen Einprägung von Biegewellen bedarf.

Die Erfindung wurde vorstehend anhand des Beispiels der geräuschfreien Einprägung von Biegewellen in die Abdeckscheibe eines Displays beschrieben. Die Erfindung lässt sich aber ebenso bei Bedieneinheiten einsetzen, die jeweils ein unveränderbares Bedienpanel mit "festen" Bedienfeldern aufweisen. Auf dem Bedienpanel befinden sich dabei beispielsweise aufgedruckte/eingravierte oder eingelassene grafische bzw. alphanumerische Informationen, die verschiedene betätigbare Funktionen eines Geräts definieren. Das Bedienpanel ist dabei aus beispielsweise undurchsichtigem "hartem" Material wie beispielsweise Metall bzw. gehärtetem Metall gefertigt. Vorzugsweise wird Metall bzw. Material eingesetzt, dessen E-Modul mindestens 40 bis 50 GPa beträgt. Bei einer derartigen Bedieneinheit können dann Bedienpanel und Rahmen sowie Kammstrukturelement einteilig ausgeführt sein, was beispielsweise durch spanende Bearbeitung eines Werkstoffs aus Metall (oder auch aus gehärtetem Glas) oder gießtechnisch erfolgen kann. Sämtliche für die Erfindung wesentlichen Elemente wie Berührungsfläche, Rahmen zur Reflektion der Biegewellen als auch die Piezo-Kammern (d.h. das Kammstrukturelement) bilden ein gemeinsames Element. Damit können die fehleranfälligen und schwierig herzustellenden Klebeverbindungen zwischen der Berührungsfläche und dem Rahmen inklusive des Kammstrukturelements komplett entfallen.

**Bezugszeichenliste**

| | |
|---|---|
| 10 | Bedieneinheit |
| 12 | Bedienfläche |
| 14 | Gehäuse |
| 16 | Rahmen |
| 18 | Abdeckscheibe |
| 20 | Klebeschicht |
| 22 | Rand |
| 24 | Aktuator |
| 26 | Piezo-Element |
| 28 | Elektrode des Piezo-Elements |
| 30 | Elektrode des Piezo-Elements |
| 32 | Klebeverbindung |
| 34 | Kontaktfläche |
| 36 | Unterseite |
| 38 | Ansteuereinheit |
| 40 | Touchsensorik |
| 42 | Kammstrukturelement |
| 44 | Arme |
| 46 | Basisabschnitte |
| 48 | Kammern |
| 50 | Mittenbereich der Abdeckscheibe |
| 52 | Öffnung in der Kammer |
| 54 | abgedunkelter/geschwärzter Randbereich |
| 56 | Berührungsort |
| 58 | Luftspalt zwischen Abdeckscheibe und Touchpanel |
| 60 | Touchpanel |
| 62 | Display |
| 64 | Bondingmasse |

**Patentansprüche**

1. Bedieneinheit für eine Fahrzeugkomponente, insbesondere Mensch-Maschine-Interface für ein Fahrzeug, mit

   - einem Gehäuse (14) mit einem Rahmen (16),
   - einem in und/oder an dem Gehäuse (14) angeordneten Display (62), das eine transparente Abdeckscheibe (18) mit einem Rand (22) aufweist, der von dem Rahmen (16) eingefasst ist,
   - einer in und/oder an dem Gehäuse (14) angeordneten Touchsensorik (40) und
   - mehreren entlang des Randes (22) der Abdeckscheibe (18) nebeneinander angeordneten Aktuatoren (24) zur Einbringung von Biegewellen in die Abdeckscheibe (18),
   - wobei jedem Aktuator (24) an der Abdeckscheibe (18) eine Kontaktfläche (34) zugeordnet ist, über die der Aktuator (24) zur Einbringung von Biegewellen in die Abdeckscheibe (18) auf diese einwirkt,
   - wobei sich die von den Aktuatoren (24) in die Abdeckscheibe (18) eingebrachten Biegewellen in der Abdeckscheibe (18) überlagern und der Abdeckscheibe (18) eine taktil erfassbare, ortsaufgelöste Oberflächenstruktur verleihen und,
   - einer mit der Touchsensorik (40) und den Aktuatoren (24) verbundenen Auswerte- und Ansteuereinheit (38) zur Ansteuerung der Touchsensorik (40), zur Auswertung von von der Touchsensorik (40) gelieferten Signalen und zur Ansteuerung der Aktuatoren (24) in Abhängigkeit von von der Touchsensorik (40) gelieferten Signalen,
   **dadurch gekennzeichnet,**
   - **dass** sich von dem Rahmen (16) des Gehäuses (14) mit der Abdeckscheibe (18) verklebte Arme (44) einwärts erstrecken, die einzelne, längs des Rahmens (16) angeordnete Kammern (48) bilden, in denen jeweils eine Kontaktfläche (34) angeordnet ist, wobei die Kammern (48) an ihren zum Mittenbereich (50) der Abdeckscheibe (18) weisenden Innenseiten offen sind,
   - **dass** die Kontaktflächen (34) jeweils in einem Abstand (a) zu ihren jeweiligen Kammerwänden angeordnet sind und dadurch die Einbringung von Biegewellen in die Abdeckscheibe (18) und/oder die Ausbreitung von Biegewellen in der Abdeckscheibe (18) mit aus der Größe des Abstands resultierenden Wellenlängen bzw. Frequenzen gedämpft sind, und
   - **dass** der Abstand zur Dämpfung von Biegewellen mit Frequenzen im hörbaren Frequenzbereich gewählt ist.

2. Bedieneinheit nach Anspruch 1, **dadurch gekennzeichnet, dass** der Abstand die Distanz der Kammerwände zum geometrischen Mittelpunkt der Kontaktfläche (34) ist.

3. Bedieneinheit nach Anspruch 1 oder 2, **dadurch gekennzeichnet, dass** jede Kontaktfläche (34) eine Kreisfläche ist.

4. Bedieneinheit nach einem der Ansprüche 1 bis 3, **dadurch gekennzeichnet, dass** die Abdeckscheibe (18) einen Spalt zum Display (62) aufweist.

5. Bedieneinheit nach einem der Ansprüche 1 bis 4, **dadurch gekennzeichnet, dass** die Abdeckscheibe (18) mittels einer Schicht aus einem transparenten, elastischen Klebermaterial mit dem Display (62) oder der Touchsensorik (40) gebondet ist.

**6.** Bedieneinheit nach einem der Ansprüche 1 bis 5, **dadurch gekennzeichnet, dass** die Arme (44) an ihren zum Rahmen (16) weisenden Enden durch Basisabschnitte (46) verbunden sind und dass die Arme (44) und die Basisabschnitte (46) ein auf der Abdeckscheibe (18) aufgeklebtes Kammstrukturelement (42) bilden.

**7.** Bedieneinheit nach einem der Ansprüche 1 bis 5, **dadurch gekennzeichnet, dass** die Arme (44) einteilig mit dem Rahmen (16) verbunden sind.

**8.** Bedieneinheit nach einem der Ansprüche 1 bis 7, **dadurch gekennzeichnet, dass** die Kammern (48) an ihren zum Mittenbereich (50) der Abdeckscheibe (18) weisenden Innenseiten jeweils eine Öffnung (52) aufweisen, die sich über 60° bis 120°, insbesondere über 90° des Umfangs der jeweiligen Kammer erstreckt.

**9.** Bedieneinheit nach Anspruch 8, **dadurch gekennzeichnet, dass** die Öffnung (52) symmetrisch zu einer orthogonal zum Rahmen (16) verlaufenden Symmetrieachse der Kammer ist.

**10.** Bedieneinheit nach einem der Ansprüche 1 bis 9, **dadurch gekennzeichnet, dass** die Kammern (48) jeweils symmetrisch sind.

**11.** Bedieneinheit nach einem der Ansprüche 1 bis 10, **dadurch gekennzeichnet, dass** jede Kontaktfläche (34) eine Kreisfläche ist und dass die Arme (44) und der Rahmen (16) pro Kontaktfläche (34) eine Kammer (48) mit zur Kontaktfläche (34) konzentrischer Innenumfangsfläche und mit einer zur Kontaktfläche (34) konzentrischen Bodenfläche bilden.

**12.** Bedieneinheit nach einem der Ansprüche 1 bis 11, **dadurch gekennzeichnet, dass** die Aktuatoren (24) als Piezo-Aktuatoren mit jeweils einem insbesondere runden, scheibenförmigen, ein- oder mehrlagigen Piezo-Element (26) ausgebildet sind, das an der jeweiligen Kontaktfläche (34) mit der Abdeckscheibe (18) verklebt ist.

**13.** Bedieneinheit nach einem der Ansprüche 1 bis 12, **dadurch gekennzeichnet, dass** die Touchsensorik (40) mit der Abdeckscheibe (18) starr verbundene, insbesondere verklebte Ultraschallsender und Ultraschallempfänger zur Einprägung von Ultraschall-Biegewellen in die Abdeckscheibe (18) zur ortsaufgelösten Detektion des Ortes (56) einer Berührung der Abdeckscheibe (18) durch ein Objekt, insbesondere den Finger einer Person aufweist.

**14.** Bedieneinheit nach Anspruch 13, **dadurch gekennzeichnet, dass** die Ultraschallsender und Ultraschallempfänger jeweils als ein- oder mehrlagige Piezo-Elemente (26) ausgeführt sind.

**15.** Bedieneinheit nach Anspruch 13 oder 14, **dadurch gekennzeichnet, dass** die Funktionen der Ultraschallsender und Ultraschallempfänger von einigen der Aktuatoren (24) ausführbar sind, und zwar in einer ersten Phasen einer Berührung der Abdeckscheibe (18), wobei die betreffenden ersten Aktuatoren (24) in einer zweiten Phase der Berührung zur Einprägung von Biegewellen in die Abdeckscheibe (18) zwecks taktiler Rückmeldung der Berührung am jeweils zuvor detektierten Berührungsort (56) vorgesehen sind.

**16.** Bedieneinheit nach einem der Ansprüche 1 bis 15, **dadurch gekennzeichnet, dass** die Touchsensorik (40) ein zwischen der Abdeckscheibe (18) und dem Display (62) angeordnetes Touchpanel (60) zur ortsaufgelösten Detektion des Ortes (56) einer Berührung der Abdeckscheibe (18) durch ein Objekt, insbesondere den Finger einer Person aufweist.

**Claims**

**1.** An operating unit for a vehicle component, particularly a human-machine interface for a vehicle, comprising

- a housing (14) with a frame (16),
- a display (62) arranged in and/or at the housing (14) with a transparent cover pane (18) having an edge (22) which is enclosed by the frame (16),
- a touch sensor system (40) arranged in and/or at the housing (14), and
- a plurality of actuators (24) arranged adjacently along the edge (22) of the cover pane (18) for introducing flexural waves into the cover pane (18),
- wherein each actuator (24) on the cover pane (18) is assigned to a contact surface (34) by means of which the actuator (24) acts on the cover pane (18) in order to introduce flexural waves into the cover pane (18),
- wherein the flexural waves introduced by the actuators (24) into the cover pane (18) are superposed in the cover pane (18) and provide the cover pane (18) with a tactilely sensible, locally resolved surface structure, and
- an evaluation and control unit (38) connected to the touch sensor system (40) and the actuators (24) for controlling the touch sensor system (40) in order to evaluate the signals provided by the touch sensor system (40), and for controlling the actuators (24) depending on the signals provided by the touch sensor system (40),
**characterized in that**

- arms (44) glued to the cover pane (18) extend inwards from the frame (16) of the housing (14) and form individual chambers (48) arranged along the frame (16), in each of which a contact surface (34) is arranged, wherein the chambers (48) are open on their inner sides facing towards the central area (50) of the cover pane (18),

- the contact surfaces (34) are each arranged at a distance (a) to their respective chamber walls and consequently the introduction of flexural waves into the cover pane (18) and/or the propagation of flexural waves in the cover pane (18) is damped with wavelengths or frequencies resulting from the magnitude of the distance, and

- the distance is selected in such a way that flexural waves having frequencies in the audible frequency range are damped.

2. The operating unit according to claim 1, **characterized in that** the distance is the space of the chamber walls to the geometrical center of the contact surface (34).

3. The operating unit according to claim 1 or 2, **characterized in that** each contact surface (34) is a circular surface.

4. The operating unit according to any one of claims 1 to 3, **characterized in that** the cover pane (18) comprises a gap relative to the display (62).

5. The operating unit according to any one of claims 1 to 4, **characterized in that** the cover pane (18) is bonded to the display (62) or to the touch sensor system (40) by means of a layer of a transparent, elastic adhesive material.

6. The operating unit according to any one of claims 1 to 5, **characterized in that** arms (44) are connected at their endings facing towards the frame (16) by means of the base sections (46), and **in that** the arms (44) and the base sections (46) form a comb structure element (42) glued onto the cover pane (18).

7. The operating unit according to any one of claims 1 to 5, **characterized in that** the arms (44) are integrally connected to the frame (16).

8. The operating unit according to any one of claims 1 to 7, **characterized in that** the chambers (48) comprise at their inner sides facing towards the central area (50) of the cover pane (18) respectively one opening (52) extending over 60° to 120°, particularly over 90° of the circumference of the respective chamber.

9. The operating unit according to claim 8, **characterized in that** the opening (52) is symmetric to a symmetry axis of the chamber running orthogonally to the frame (16).

10. The operating unit according to any one of claims 1 to 9, **characterized in that** the chambers (48) are each symmetric.

11. The operating unit according to any one of claims 1 to 10, **characterized in that** each contact surface (34) is a circular face, and **in that** the arms (44) and the frame (16) form a chamber (48) per contact surface (34) with an inner circumference running concentrically to the contact surface (34), and with a bottom surface running concentrically to the contact surface (34).

12. The operating unit according to any one of claims 1 to 11, **characterized in that** the actuators (24) are designed as piezo actuators with respectively one particularly circular, disc-shaped, single-layer or multi-layer piezo element (26) which is glued to the cover pane (18) on the respective contact surface (34).

13. The operating unit according to any one of claims 1 to 12, **characterized in that** the touch sensor system (40) comprises ultrasonic transmitters and ultrasonic receivers which are rigidly bonded, particularly glued, to the cover pane (18) for impressing ultrasonic flexure waves into the cover pane (18) for a locally resolved detection of the point (56) on the cover pane (18) touched by an object, particularly by the finger of a person.

14. The operating unit according to claim 13, **characterized in that** the ultrasonic transmitter and the ultrasonic receiver are each formed as single-layer or multi-layer piezo elements (26).

15. The operating unit according to claim 13 or 14, **characterized in that** the functions of the ultrasonic transmitters and the ultrasonic receivers can be executed by some of the actuators (24), namely in a first phase of touching the cover pane (18), wherein the corresponding first actuators (24) are provided in a second phase of touching for impressing flexure waves into the cover pane (18) for a tactile feedback on touching at the respective previously detected touch point (56).

16. The operating unit according to any one of claims 1 to 15, **characterized in that** the touch sensor system (40) comprises a touch panel (60) arranged between the cover pane (18) and the display (62) for a locally resolved detection of the point (56) on the cover pane (18) touched by an object, particularly by the finger of a person.

**Revendications**

1. Unité de commande pour un composant de véhicule, en particulier interface homme-machine pour un véhicule, avec

 - un logement (14) avec un cadre (16),
 - un afficheur (62) disposé dans et/ou sur le logement (14), lequel afficheur présente un disque de couverture (18) transparent muni d'un bord (22) qui est enchâssé par le cadre (16),
 - un système de capteurs tactile (40) disposé dans et/ou sur le logement (14), et
 - plusieurs actionneurs (24) juxtaposés le long du bord (22) du disque de couverture (18) et destinés à introduire des ondes de flexion dans le disque de couverture (18),
 - une surface de contact (34) étant affectée à chaque actionneur (24) sur le disque de couverture (18), surface par le biais de laquelle l'actionneur (24) agit sur le disque de couverture (18) pour l'introduction d'ondes de flexion dans celui-ci,
 - les ondes de flexion introduites par les actionneurs (24) dans le disque de couverture (18) se superposent dans le disque de couverture (18), et confèrent au disque de couverture (18) une structure superficielle à résolution locale pouvant être détectée tactilement, et
 - une unité d'analyse et de commande (38) connectée au système de capteurs tactile (40) et aux actionneurs (24) et destinée à commander le système de capteurs tactile (40), à analyser des signaux fournis par le système de capteurs tactile (40), et à commander les actionneurs (24) en fonction des signaux fournis par le système de capteurs tactile (40),
 **caractérisée en ce que**
 - des bras (44) collés avec le disque de couverture (18) s'étirent vers l'intérieur à partir du cadre (16) du logement (14) et forment les différentes chambres (48) disposées le long du cadre (16) dans lesquelles respectivement une surface de contact (34) est disposée, les chambres (48) étant ouvertes au niveau de leurs côtés intérieurs dirigés vers la zone centrale (50) du disque de couverture (18),
 - les surfaces de contact (34) sont disposées respectivement à un intervalle (a) par rapport à leurs parois de chambres respectives, et de ce fait l'introduction d'ondes de flexion dans le disque de couverture (18) et/ou la propagation d'ondes de flexion dans le disque de couverture (18) ayant des longueurs d'onde ou respectivement des fréquences résultant de la grandeur de l'intervalle sont amorties, et
 - l'intervalle est choisi pour l'amortissement des ondes de flexion ayant des fréquences dans la plage de fréquences audible.

2. Unité de commande selon la revendication 1, **caractérisée en ce que** l'intervalle est la distance des parois de chambres au point central géométrique de la surface de contact (34).

3. Unité de commande selon la revendication 1 ou 2, **caractérisée en ce que** chaque surface de contact (34) est une surface circulaire.

4. Unité de commande selon l'une des revendications 1 à 3, **caractérisée en ce que** le disque de couverture (18) présente un interstice par rapport à l'afficheur (62).

5. Unité de commande selon l'une des revendications 1 à 4, **caractérisée en ce que** le disque de couverture (18) est lié à l'afficheur (62) ou au système de capteurs tactile (40) au moyen d'une couche en matériau adhésif élastique transparent.

6. Unité de commande selon l'une des revendications 1 à 5, **caractérisée en ce que**, à leurs extrémités dirigées vers le cadre (16), les bras (44) sont raccordés par des tronçons de base (46) et **en ce que** les bras (44) et les tronçons de base (46) forment un élément à structure en peigne (42) collé sur le disque de couverture (18).

7. Unité de commande selon l'une des revendications 1 à 5, **caractérisée en ce que** les bras (44) sont raccordés d'une seule pièce avec le cadre (16).

8. Unité de commande selon l'une des revendications 1 à 7, **caractérisée en ce que**, au niveau de leurs côtés intérieurs dirigés vers la zone centrale (50) du disque de couverture (18), les chambres (48) présentent respectivement une ouverture (52) qui s'étend sur 60° à 120°, en particulier sur 90°, de la circonférence de la chambre respective.

9. Unité de commande selon la revendication 8, **caractérisée en ce que** l'ouverture (52) est symétrique relativement à un axe de symétrie disposé de façon orthogonale au cadre (16).

10. Unité de commande selon l'une des revendications 1 à 9, **caractérisée en ce que** les chambres (48) sont respectivement symétriques.

11. Unité de commande selon l'une des revendications 1 à 10, **caractérisée en ce que** chaque surface de contact (34) est une surface circulaire et **en ce que** les bras (44) et le cadre (16) forment, pour chaque surface de contact (34), une chambre (48) avec une surface circonférentielle intérieure concentrique à la surface de contact (34) et avec une surface de fond concentrique à la surface de contact (34).

12. Unité de commande selon l'une des revendications 1 à 11, **caractérisée en ce que** les actionneurs (24) sont constitués en tant qu'actionneurs piézoélectriques avec respectivement un élément piézoélectrique (26) en particulier rond, en forme de disque, à une ou plusieurs couches, qui est collé au disque de couverture (18) sur la surface de contact (34) respective.

13. Unité de commande selon l'une des revendications 1 à 12, **caractérisée en ce que** le système de capteurs tactile (40) présente des émetteurs d'ultrasons et des récepteurs d'ultrasons raccordés, en particulier collés, de façon rigide au disque de couverture (18), et destinés à l'application d'ondes de flexion ultrasonores dans le disque de couverture (18) pour la détection à résolution locale de l'emplacement (56) d'une entrée en contact du disque de couverture (18) avec un objet, en particulier le doigt d'une personne.

14. Unité de commande selon la revendication 13, **caractérisée en ce que** les émetteurs d'ultrasons et les récepteurs d'ultrasons sont réalisés respectivement en tant qu'éléments piézoélectriques (26) à une ou plusieurs couches.

15. Unité de commande selon la revendication 13 ou 14, **caractérisée en ce que** les fonctions des émetteurs d'ultrasons et des récepteurs d'ultrasons peuvent être exécutées par quelques-uns des actionneurs (24), et cela dans une première phase d'une entrée en contact avec le disque de couverture (18), les premiers actionneurs (24) concernés étant, dans une deuxième phase de l'entrée en contact, prévus pour l'application d'ondes de flexion dans le disque de couverture (18) à des fins de réponse tactile du contact à l'emplacement de contact (56) respectivement détecté antérieurement.

16. Unité de commande selon l'une des revendications 1 à 15, **caractérisée en ce que** le système de capteurs tactile (40) présente un panneau tactile (60) disposé entre le disque de couverture (18) et l'afficheur (62) pour la détection, en résolution locale, de l'emplacement (56) d'une entrée en contact du disque de couverture (18) avec un objet, en particulier le doigt d'une personne.

**Fig.1**

II

**Fig.2**

**Fig.3**

**Fig.4**

**Fig.5**

**Fig.6**

**Fig.7**

Fig.8

Fig.9

**Fig.10**

**Fig.11**

Fig.12

Fig.13

EP 3 583 490 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2684111 A1
- US 9436284 B2
- US 9449476 B2
- US 2013127755 A1
- US 9477350 B2

**In der Beschreibung aufgeführte Nicht-Patentliteratur**

- **HUDIN et al.** *Localized Tactile Feedback on a Transparent Surface through Time-Reversal Wave Focusing*
- **K.F. GRAFF.** Wave Motion in Elastic Solids. Courier Dover Publications, 1975